# EUROPÄISCHE PATENTSCHRIFT

(11) **EP 1 985 597 B1**
(45) Veröffentlichungstag und Bekanntmachung des Hinweises auf die Patenterteilung: **02.10.2019**
(21) Anmeldenummer: 08007607.8
(22) Anmeldetag: 18.04.2008
(51) Int. Cl.: C04B 41/81, C04B 41/89, C04B 41/87, B01J 35/00, B01J 37/02

(54) **Keramischer Formkörper mit photokatalytischer Beschichtung sowie mit einer Sperrschicht**
Ceramic article having a photocatalytic coating and a barrier coating
Pièce céramique avec revêtement photocatalytique et revêtement barrière

(30) Priorität: 20.04.2007 DE 102007020322
(43) Veröffentlichungstag der Anmeldung: 29.10.2008
(73) Patentinhaber: ERLUS AKTIENGESELLSCHAFT, 84088 Neufahrn (DE)
(72) Erfinder: Grau, Rüdiger Dr., 86637 Wertingen (DE); Stoll, Alexander Dr., 85354 Freising (DE); Ackerhans, Carsten Dr., 84066 Mallersdorf-Pfaffenberg (DE); Gast, Eduard Dr., 84559 Kraiburg (DE)
(74) Vertreter: Walcher, Armin

(56) Entgegenhaltungen:
- DE-A1- 10 324 519

## Beschreibung

### Der Stand der Technik

Die Erfindung betrifft einen keramischen Formkörper aus porösem oxidkeramischem Basismaterial mit einer photokatalytisch aktiven Schicht, welcher bei Beregnung oder Berieselung mit Wasser eine selbstreinigende Oberfläche aufweist und bei längerer Exposition im Außenbereich eine verringerte oder keine Vergrünung aufweist sowie ein Verfahren zur Herstellung desselben.

Aus der WO 2003/101913 A1 ist ein keramischer Formkörper mit einer selbstreinigenden Oberfläche bekannt, wobei der keramische Formkörper eine TiO₂-Beschichtung aufweist. Die Oberfläche der Titanoxidschicht kann zusätzlich hydrophobiert werden.

Die DE 103 24 519 A1 betrifft einen keramischen Formkörper mit photokatalytischer Beschichtung und ein Verfahren zur Herstellung desselben.

### Die Aufgabenstellung

Aufgabe der Erfindung ist es, einen keramischen Formkörper, insbesondere Dachziegel, Fassadenplatten und Vormauersteine bereitzustellen, der unter Außenbedingungen selbstreinigend ist und eine verzögerte oder keine Vergrünung aufweist.

Eine weitere Aufgabe ist es, ein Verfahren zur Herstellung eines solchen verbesserten keramischen Formkörpers anzugeben.

### Die Lösung

Die der Erfindung zugrunde liegende Aufgabe wird gelöst mit einem keramischen Formkörper gemäß Patentanspruch 1 und mit einem Herstellungsverfahren für einen solchen Formenkörper gemäß Patentanspruch 7.

Gemäß dem Gegenstand des Patentanspruchs 1 handelt es sich um einen keramischen Formkörper aus porösem oxidkeramischem Basismaterial, insbesondere Dachziegel, Ziegel, Klinker, Vormauerstein, Fassadenplatte oder Fassadenwand,
wobei die Oberfläche des oxidkeramischen Basismaterials eine photokatalytisches Material enthaltende Schicht trägt, die sich vorzugsweise bis in das oxidkeramische Basismaterial hinein erstreckt, und
wobei innerhalb der photokatalytisch aktives Material enthaltenden Schicht eine Sperrschicht, die eine Dicke in einem Bereich von 1 mm und 4 mm aufweist, ausgebildet ist, die sich vorzugsweise bis in das oxidkeramische Basismaterial hineinerstreckt, wobei die Sperrschicht von einer Teilschicht der photokatalytisch aktives Material enthaltenden Schicht überdeckt ist, welche an der freien Oberfläche hydrophil ist, wobei die Sperrschicht hydrophob ist.

### Die Sperrschicht

Unter Sperrschicht im Sinne der vorliegenden Erfindung ist eine Schicht zu verstehen, die aus einem vorzugsweise weitgehend Wasser-undurchlässigen und/oder Ionen-undurchlässigen Material ausgebildet ist. Die Sperrschicht ist hydrophob. Hydrophob im Sinne der vorliegenden Erfindung bedeutet vorzugsweise, dass der Kontaktwinkel größer als 90°, vorzugsweise größer als 140°, am meisten bevorzugt größer als 170° ist. Bei einer bevorzugten Ausführungsform umfasst der erfindungsgemäße Formkörper eine Sperrschicht, die einen Kontaktwinkel in einem Bereich von 90 bis 100° aufweist. Als Kontaktwinkel wird der Winkel bezeichnet, den ein Flüssigkeitstropfen, insbesondere Wasser, auf der Oberfläche eines Feststoffs, insbesondere der Sperrschicht, zu dieser bzw. deren Oberfläche bildet. Unter hydrophober Sperrschicht wird vorzugsweise verstanden, dass die Sperrschicht aus einem Material ausgebildet wird, das der Sperrschicht hydrophobe Eigenschaften verleiht. Die Messung des Kontaktwinkels wird vorzugsweise an der freien Oberfläche einer Sperrschicht durchgeführt, von der die übrigen Schichten des erfindungsgemäßen Formkörpers entfernt wurden.

Bei einer Ausführungsform des erfindungsgemäßen Formkörpers - wie sie unmittelbar nach dem Beschichtungsvorgang vorliegt - wird die ein photokatalytisches Material enthaltende Schicht von einer Teilschicht der Sperrschicht überdeckt, welche an der freien Oberfläche hydrophob ist. Diese hydrophobe Teilschicht überdeckt somit die photokatalytisch aktives Material enthaltende Schicht. Die Sperrschicht kann auch bereits bei der Herstellung der photokatalytisch aktives Material enthaltenden Schicht von der photokatalytisch aktives Material enthaltenden Schicht bedeckt ausgebildet werden.

Unter Einwirkung von UV-Licht oder Sonnenlicht kann diese überdeckende hydrophobe Teilschicht, die kein photokatalytisch aktives Material enthält, abgebaut werden, sodass schließlich eine hydrophile ein photokatalytisches Material enthaltende Schicht an der freien Oberfläche des photokatalytischen Formkörpers liegt und/oder es kann die hydrophobe Teilschicht so modifiziert werden, sodass die hydrophobe Teilschicht der Sperrschicht, die kein photokatalytisch aktives Material enthält, hydrophil wird. Beispielsweise können, falls die Sperrschicht Silikone enthält, bei den Silikonen die Alkylgruppen zu OH-Gruppen oxidiert werden.

Erfindungsgemäß wird die Sperrschicht von einer Teilschicht der photokatalytisches Material enthaltenden Schicht überdeckt, welche an der freien Oberfläche hydrophil ist. Erfindungsgemäß entspricht dies dem Formkörper mit einer Schichtenstruktur, wie sie sich bei längerer Betriebsdauer bei Einsatz im Außenbereich, d.h. unter Einwirkung von Sonnenlicht einstellt, beispielsweise nach einer Exposition gegenüber Sonnenlicht von mindestens einer Woche, vorzugsweise mindestens drei Wochen. Diese erfindungsgemäße Ausführungsform beschreibt somit den Formkörper im Betriebszustand bei Einsatz im Außenbereich.

Vorzugsweise wird durch das Sonnenlicht oder durch künstliche Aktivierung mittels UV-Licht die Sperrschicht ausgehend von der freien Oberfläche des keramischen Formkörpers bis zu einer Schichtdicke von 5 nm bis 500 nm, vorzugsweise 20 bis 200 nm, abgebaut oder unter Einwirkung von UV-Licht oder Sonnenlicht wird diese hydrophobe Teilschicht soweit chemisch modifiziert, sodass diese hydrophile Eigenschaften aufweist.

Vorteilhafterweise kann der erfindungsgemäße keramische Formkörper als Abdeckung eines Baukörpers im Außenbereich z.B. als Dachziegel verwendet werden, wobei der Formkörper unter Einwirkung von Regen und Sonnenlicht selbstreinigend ist und die Vergrünung des Formkörpers im Außenbereich verzögert und/oder verhindert.

Im Unterschied zu den im Stand der Technik beschriebenen keramischen Formkörpern, welche mit einer photokatalytischen Beschichtung versehen sind und lediglich einen hydrophoben Überzug auf der Oberfläche der photokatalytischen Beschichtung umfassen, aber keine Sperrschicht aufweisen, weist der erfindungsgemäße keramische Formkörper zusätzlich die Sperrschicht auf, die vermutlich die Diffusion von Ionen aus dem oxidkeramischen Basismaterial in die photokatalytisch aktives Material enthaltende Schicht verhindert. Ferner verhindert vermutlich die Sperrschicht auch ein Eindringen von größeren Wassermengen in die ein photokatalytisches Material enthaltende Schicht und/oder das oxidkeramische Basismaterial. Es wird angenommen, dass verhindert wird, dass das Wasser in der photokatalytisches Material enthaltenden Schicht und/oder in dem oxidkeramischen Basismaterial gespeichert wird. Ferner stehen vermutlich den Mikroorganismen nicht ausreichend Salze zur Verfügung, die eine Vergrünung ermöglichen. Dies führt überraschenderweise zu einer starken Verringerung der Vergrünung des keramischen Formkörpers unter Außenbedingungen und damit zu einem deutlich verbesserten Selbstreinigungseffekt. Der Effekt der Sperrschicht ist besonders wesentlich bei der Anwendung bei porösen, vorzugsweise grobkeramischen Formkörpern, wie z.B. Tondachziegel.

Durch die Sperrschicht wird die Besiedelung des keramischen Formkörper durch ablagernde(r) bzw. einlagernde(r) Schimmel, Pilzhyphen, Pflanzenwuchs, beispielsweise Moos, Algen etc., bakterielle Verunreinigungen weitgehend verhindert. Ferner ist die photokatalytische Aktivität der photokatalytisch aktives Material enthaltenden Schicht bei Umgebungstemperatur ausreichend, um die genannten Stoffe bzw. Verunreinigungen zu oxidieren und somit abzubauen. Die oxidierten Substanzen weisen ein vermindertes Haftungsvermögen auf und werden bei Beregnung bzw. Berieselung mit Wasser leicht von der Oberfläche des erfindungsgemäßen Formkörpers abgespült. Es wird vermutet, dass die photokatalytisch aktives Material enthaltende Schicht auf die organischen Verunreinigungen oxidativ einwirken.

Vorzugsweise weist der erfindungsgemäße Formkörper bei der Verwendung als Abdeckung eines Baukörpers im Außenbereich bis zu einem Zeitraum von 1 Jahr, vorzugsweise bis zu einem Zeitraum von 5 Jahren, am meisten bevorzugt bis zu einem Zeitraum von 15 Jahren keine Vergrünung auf.

Vorzugsweise umfasst die Sperrschicht eine oder mehrere Verbindungen, ausgewählt aus der Gruppe, bestehend aus Siloxanen, Silanen, Siliconaten und Mischungen davon. Vorzugsweise umfasst die Sperrschicht Alkylpolysiloxane, Alkoxysiloxane, Alkalisiliconate, Erdalkalisiliconate, Fluorsilane, Fluoralkylsilane oder Gemische davon. Die linearen und/oder verzweigten Alkylreste bestehen vorzugsweise aus 1 bis 8 C-Atomen, weiter bevorzugt aus 1 bis 5 C-Atomen. Vorzugsweise umfasst die Sperrschicht eine Mischung aus Alkalisiliconaten und/oder Erdalkalisiliconaten, wobei Alkali aus der Gruppe ausgewählt wird, die aus Li, Na, K und Gemischen davon besteht und wobei Erdalkali aus der Gruppe ausgewählt wird, die aus Be, Mg, Ca, Sr, Ba und Gemischen davon besteht.

Bei einer besonders bevorzugten Ausführungsform umfasst oder besteht die Sperrschicht aus einem hydrophoben Material, ausgewählt aus der Gruppe, bestehend aus Methylsilikonat, Alkyltriethoxysilan, Tetraethylsilicat, einer Siliconmicroemulsion und Mischungen daraus.

### Die photokatalvtisches Material enthaltende Schicht

Die photokatalytisch aktives Material enthaltende Schicht umfaßt vorzugsweise TiO₂, Fe₂O₃, ZnO, CeO₂ und/oder ZrO₂. Insbesondere umfasst die photokatalytisch aktives Material enthaltende Schicht Partikel aus TiO₂, Fe₂O₃, ZnO, CeO₂ und/oder ZrO₂. Dabei ist es nicht notwendig, dass die photokatalytisch aktives Material enthaltende Schicht über ihre gesamte Schichtdicke eine photokatalytische Aktivität aufweist. Es wird angenommen, daß die Schicht insbesondere in ihrem oberen Bereich, d.h. im Bereich der Schicht, der von dem oxidkeramischen Körper abgewandt ist, photokatalytisch aktiv ist.

Die photokatalytisch aktives Material enthaltende Schicht, welche auch als photokatalytisch aktive Schicht bezeichnet werden kann, weist vorzugsweise eine hochporöse Struktur auf, d.h. die spezifische Oberfläche der katalytisch aktiven, porösen oxidkeramischen Beschichtung liegt vorzugsweise in einem Bereich von 25 m²/g bis 200 m²/g, weiter bevorzugt in einem Bereich von etwa 40 m²/g bis etwa 150 m²/g. Weiter bevorzugt liegt die spezifische Oberfläche in einem Bereich von 40m²/g bis etwa 100 m²/g.

Vorzugsweise wird das verwendete TiO₂ durch Flammenhydrolyse von TiCl₄ als hochdisperses TiO₂ erhalten, welches vorzugsweise eine Partikelgröße von etwa 15 nm bis 30 nm, vorzugsweise 21 nm aufweist.

Bei Verwendung von TiO₂ in der oxidkeramischen Beschichtung ist bevorzugt, dass das TiO₂ wenigstens teilweise in der Anatas-Struktur, vorzugsweise zu wenigstens 40 Gew.-%, bevorzugt zu wenigstens 70 Gew.-%, weiter bevorzugt zu wenigstens 80 Gew.-%, bezogen auf die Gesamtmenge an TiO₂, vorliegt.

Gemäß einer weiteren bevorzugten Weiterbildung der Erfindung liegt das TiO₂ zu etwa 100 % in der Anatas-Struktur vor.

Beispielsweise kann hierfür das unter der Bezeichnung Titandioxid P 25 von der Degussa AG, Deutschland erhältliche Titandioxid verwendet werden, das aus einem Anteil von 70 % Anatasform und 30 % Rutil besteht. Äußerst vorteilhaft absorbiert Titandioxid in der Anatasform UV-Licht mit Wellenlängen von kleiner als 385 nm. Rutil absorbiert UV-Licht mit einer Wellenlänge von kleiner als 415 nm.

### Die Schichtdicken

Die Sperrschicht weist vorzugsweise eine auf dem oxidkeramischen Basismaterial aufliegende Teilschicht und eine in das oxidkeramische Basismaterial eindringende Teilschicht auf. Die Gesamtschichtdicke setzt sich bei solchen Ausführungen aus der Schichtdicke der aufliegenden Teilschicht und der Schichtdicke der in das oxidkeramische Basismaterial eindringenden Teilschicht zusammen. Es kommen jedoch auch Ausführungen in Frage, bei denen die Sperrschicht ausschließlich als auf dem oxidkeramischen Basismaterial aufliegende Schicht oder ausschließlich als in das oxidkeramische Basismaterial eindringende Schicht ausgebildet ist.

Im folgenden werden Abmessungen von Schichtdicken angegeben. Diese sind in vertikaler Richtung, bezogen auf die freie Oberfläche des Formkörpers, in das Innere des Formkörpers gemessen.

Erfindungsgemäß weist die Sperrschicht eine Gesamtschichtdicke in einem Bereich von 1 mm bis 4 mm, vorzugsweise 1,5 bis 2,5 mm auf. Bei einer Ausführungsform erstreckt sich die in das oxidkeramische Basismaterial eindringende Teilschicht der Sperrschicht mindestens 1 mm, vorzugsweise mindestens 2 mm, in das oxidkeramische Basismaterial. Bei speziellen Ausführungen erstreckt sich die eindringende Sperrschicht über die Achse des gesamten oxidkeramischen Basismaterials.

Bei bevorzugten Ausführungen weist die ein photokatalytisches Material enthaltende Schicht eine Dicke in einem Bereich von 5 bis 500 nm, vorzugsweise 50 bis 200 nm, auf.

Bei bevorzugten Ausführungen weist die Teilschicht der photokatalytisch aktives Material enthaltende Schicht, die nicht von der Sperrschicht durchdrungen wird, d.h. die die Sperrschicht überdeckende Teilschicht, eine Dicke in einem Bereich von 5 bis 500 nm, vorzugsweise 100 bis 200 nm, auf.

Bei bevorzugten Ausführungen weist die Teilschicht der Sperrschicht, die kein photokatalytisch aktives Material enthält, d.h. die die photokatalytische Schicht überdeckende Teilschicht, eine Dicke in einem Bereich von 5 bis 500 nm, vorzugsweise 100 bis 300 nm, auf.

Bei besonders bevorzugten Ausführungsformen durchdringt die Sperrschicht das oxidkeramische Basismaterial weiter als die ein photokatalytisches Material enthaltende Schicht. Bei anderen Ausführungen durchdringt die ein photokatalytisches Material enthaltende Schicht das oxidkeramische Basismaterial weiter als die Sperrschicht. Bei weiteren Ausführungsformen durchdringen die Sperrschicht und die photokatalytisch aktives Material enthaltende Schicht das oxidkeramische Basismaterial beide bis zu einer Tiefe von 5 nm bis 150 nm.

Der Bereich des oxidkeramischen Basismaterials, der durch die Sperrschicht und teilweise durch die photokatalytisch aktives Material enthaltenden Schicht durchdrungen wird, wird als Eindringschicht 6 bezeichnet. Diese Eindringschicht der Sperrschicht kann in 2 Eindringteilschichten unterteilt werden:
a) die erste Eindringteilschicht der Sperrschicht, die die Sperrschicht und die photokatalytisch aktives Material enthaltende Schicht umfasst, und
b) die zweite Eindringteilschicht der Sperrschicht, die die Sperrschicht und keine photokatalytisch aktives Material enthaltende Schicht umfasst.

Bei einer bevorzugten Ausführungsform ist die zweite Eindringteilschicht 100-fach bis 10.000-fach größer als die erste Eindringteilschicht.

Die ein photokatalytisches Material enthaltende Schicht durchdringt das oxidkeramische Basismaterial vorzugsweise mindestens bis zu einer Tiefe von mindestens 100 nm, vorzugsweise bis zu einer Tiefe von mindestens 500 nm, am meisten bevorzugt bis zu einer Tiefe von 1 bis 5 µm.

Die Tiefe ist dabei in vertikaler Richtung, bezogen auf die freie Oberfläche des Formkörpers, in das Innere des Formkörpers angegeben.

### Das Herstellungsverfahren

Gemäß Patentanspruch 7 sind zwei Verfahrensvarianten, Verfahrensvariante 1 oder Verfahrensvariante 2, zur Herstellung des erfindungsgemäßen Formkörpers vorgesehen:
Verfahrensvariante 1 umfasst die Schritte:
   a) Bereitstellen eines keramischen Formkörpers aus porösem oxidkeramischem Basismaterial,
   b) Mischen von photokatalytisch aktiven Partikeln und einer Flüssigphase unter Bereitstellen einer Suspension,
   c) Aufbringen der in Schritt b) bereit gestellten Suspension auf das poröse oxidkeramische Basismaterial des keramischen Formkörpers unter Ausbildung einer ein photokatalytisch aktives Material enthaltenden Schicht,
   d) Härten der in Schritt c) hergestellten Schicht,
   e) Aufbringen einer Sperrschicht-Lösung und/oder Sperrschicht-Suspension auf den in Schritt d) erhaltenen keramischen Formkörper, so dass die Lösung und/oder Suspension die photokatalytisch aktives Material enthaltende Schicht und vorzugsweise Teile des oxidkeramischen Basismaterials durchdringt unter Ausbildung der Sperrschicht mit einer Dicke in einem Bereich von 1 mm bis 4 mm,
   f) Trocknen des in Schritt e) bereit gestellten Formkörpers und
   g) Bestrahlen mit UV-Licht oder Sonnenlicht des in Schritt f) hergestellten Formkörpers,
und Verfahrensvariante 2 umfasst die folgenden Schritte:
   a) Bereitstellen eines keramischen Formkörpers aus porösem oxidkeramischem Basismaterial,
   b) Aufbringen einer Sperrschicht-Lösung und/oder Sperrschicht-Suspension auf das poröse oxidkeramische Basismaterial des keramischen Formkörpers, so dass die Lösung und/oder Suspension Teile des oxidkeramischen Basismaterials durchdringt unter Ausbildung der Sperrschicht mit einer Dicke in einem Bereich von 1 mm bis 4 mm,
   c) Trocknen des in Schritt b) bereitgestellten Formkörpers,
   d) Mischen von photokatalytisch aktiven Partikeln und einer Flüssigphase unter Bereitstellen einer Suspension,
   e) Aufbringen der in Schritt d) bereitgestellten Suspension auf das poröse oxidkeramische Basismaterial des keramischen Formkörpers unter Ausbildung einer photokatalytisch aktives Material enthaltenden Schicht,
   f) Härten der in Schritt e) hergestellten Schicht, und
   g) Bestrahlen mit UV-Licht oder Sonnenlicht des in Schritt f) hergestellten Formkörpers.

Dies bedeutet, dass bei Variante 1 des erfindungsgemäßen Verfahrens die Sperrschicht entsteht, indem auf die photokatalytisch aktives Material enthaltende Schicht im Schritt e) ein Wasser-undurchlässiges und/oder Ionen-undurchlässiges Material aufgebracht wird.

Bei der Verfahrensvariante 2 wird die Sperrschicht hergestellt, indem in Schritt b) Wasser- und/oder Ionen-undurchlässige Materialien als Sperrmittel eingesetzt werden.

Verfahrensvariante 1 und 2 können auch in Kombination durchgeführt werden.

Die Suspension aus Schritt b) und/oder die Sperrschicht-Lösung und/oder Suspension aus Schritt e) bzw. b) der Verfahrensvariante 1 oder 2 kann beispielsweise durch Gießen, Streichen, Sprühen, Schleudern, etc. auf das oxidkeramische Basismaterial aufgebracht werden. Selbstverständlich kann das oxidkeramische Basismaterial auch in die Lösungen bzw. Suspensionen eingetaucht werden.

Nach dem Trocknen in Schritt f) kann bei einer bevorzugten Ausführungsform eine Nachbehandlung der hergestellten keramischen Formkörpers durchgeführt werden. Die Nachbehandlung erfolgt beispielsweise durch Einstrahlung von Sonnenlicht, Laserlicht, NIR- oder UV-Licht. Durch diese Nachbehandlung wird die Oberfläche des erfindungsgemäßen keramischen Formkörpers hydrophiliert.

Mit den Verfahrensvarianten 1 und 2 lassen sich keramische Formkörper herstellen, wie sie vorstehend beschrieben sind. Das erfindungsgemäße Verfahren kann derart ausgestaltet werden, dass die vorstehend beschriebenen Anordnungen und chemischen Zusammensetzungen des erfindungsgemäßen keramischen Formkörpers erhalten werden.

Das photokatalytisch aktive Material kann unter Verwendung von Bindemitteln an dem oxidkeramischen Basismaterial fixiert werden. Beispielsweise können als Bindemittel Materialien verwendet werden, die das partikuläre Material zum einen an der Oberfläche des oxidkeramischen Basismaterials fixieren und ggf. zum anderen eine Sperrschicht ausbilden. Bindemittel, die zur Ausbildung einer Sperrschicht geeignet sind, werden auch als Sperrmittel bezeichnet.

Das Bindemittel, insbesondere das Sperrmittel, kann beispielsweise Wasserundurchlässige und/oder Ionen-undurchlässige Materialien, wie beispielsweise Polyacrylsäuren, Polyacrylate, Silicone, Polysiloxane und/oder Polysilane, umfassen. Insbesondere können die für den erfindungsgemäßen keramischen Formkörper beschriebenen chemischen Zusammensetzungen der Sperrschicht als Bindemittel, insbesondere Sperrmittel, oder in Verbindung mit einem Bindemittel eingesetzt werden.

Die photokatalytisch aktiven Partikel können auch durch eine sinterähnliche Verbindung mit dem oxidkeramischen Basismaterial verbunden werden. Beispielsweise können die Partikel in Form einer Suspension, welche vorzugsweise zusätzlich zu den photokatalytisch aktiven Partikeln Al₂O₃, SiO₂, SnO₂, ZrO₂ umfasst, auf das oxidkeramische Basismaterial aufgebracht werden. Die photokatalytisch aktiven Partikel werden hierdurch zuverlässig an der Grobkeramik oder Keramik befestigt. Als Aluminiumoxid wird bevorzugt Aluminiumoxid C verwendet, das kristallographisch der δ-Gruppe zuzuordnen ist und über eine starke oxidationskatalytische Wirkung verfügt. Geeignetes Aluminiumoxid C ist bei der Degussa AG, Deutschland, erhältlich. Beispielsweise hat sich AEROSIL COK 84, eine Mischung von 84 % AEROSIL 200 und 16 % Aluminiumoxid C, als sehr verwendbar bei der vorliegenden Erfindung erwiesen.

Das Härten der bei Verfahrensvariante 1 in Schritt (c) bereit gestellten Schicht kann zum einen durch Brennen des Formkörpers in einem Brennofen oder in einer Brennkammer bei einer Temperatur von mehr als 200 °C bis etwa 500 °C erfolgen. Falls in der in Schritt c) bereit gestellten Schicht temperaturempfindliche Materialien eingesetzt werden erfolgt das Brennen vorzugsweise unter 300°C.

Das Trocknen in Schritt f) erfolgt bei einer wesentlich tieferen Temperatur als das Brennen. Das Trocknen erfolgt üblicherweise in einem Temperaturbereich von 50 °C bis 300 °C, vorzugsweise von 80 °C bis 100 °C. In diesem Temperaturbereich wird eine Sperrschicht nicht zerstört bzw. abgebaut.

Als Flüssigphase können in Schritt b) und/oder Schritt e) beispielsweise Wasser, wässrige Lösungen und/oder Alkohole verwendet werden.

Die in Schritt b) bzw. Schritt e) vorgesehene Sperrschicht-Lösung, -Suspension und/oder Sperrmittel umfassen Materialien, welche nach der Trocknung im wesentlichen Wasser-undurchlässig und/oder Ionen-undurchlässig sind. Vorzugsweise umfasst die Sperrschicht-Lösung, -Suspension und/oder das Sperrmittel hydrophobe Materialien und weist nach dem Trocknen hydrophobe Eigenschaften auf.

Bei besonderen Ausführungsformen umfasst die Sperrschicht-Lösung, - Suspension und/oder das Sperrmittel eine oder mehrere Verbindungen, ausgewählt aus der Gruppe, bestehend aus Siloxanen, Silanen, Silikonaten und Mischungen davon. Vorzugsweise umfasst die Sperrschicht-Lösung, -Suspension und/oder das Sperrmittel Methylsilikonat.

Die mit dem erfindungsgemäßen Verfahren ausgebildete Sperrschicht erstreckt sich unmittelbar nach der Herstellung vorzugsweise durch die gesamte photokatalytisch aktives Material enthaltende Schicht in Teile des oxidkeramischen Basismaterials und bildet vorzugsweise auf der Seite der photokatalytisch aktives Material enthaltenden Schicht, die dem oxidkeramischen Basismaterial abgewandt ist, eine hydrophobe Teilschicht der Sperrschicht aus, die kein photokatalytisch aktives Material enthält. Unter Einwirkung von Sonnenlicht kann diese hydrophobe Teilschicht abgebaut werden, so dass eine hydrophile photokatalytisch aktives Material enthaltende Schicht an der freien Oberfläche des photokatalytischen Formkörpers liegt und/oder die hydrophobe Teilschicht kann so modifiziert werden, sodass die hydrophobe Teilschicht hydrophil wird. Der gleiche Effekt kann durch Bestrahlung mit künstlichem UV-Licht, Laserlicht oder NIR-Licht erhalten werden.

Die Sperrschicht wird vorzugsweise von der Seite der freien Oberfläche abgebaut, die dem oxidkeramischen Basismaterial abgewandt ist. Vorzugsweise wird durch das UV-Licht, Laserlicht, NIR-Licht oder Sonnenlicht die Sperrschicht ausgehend von der freien Oberfläche des keramischen Formkörpers bis zu einer Schichtdicke von 5 nm bis 500 nm, vorzugsweise bis zu einer Tiefe von 100 bis 200 nm, abgebaut oder unter Einwirkung von UV-Licht oder Sonnenlicht kann diese hydrophobe Teilschicht soweit chemisch modifiziert werden, sodass diese hydrophile Eigenschaften aufweist. Beispielsweise können bei den Silikonen die Alkylgruppen zu OH-Gruppen oxidiert werden.

Wenn die Sperrschicht vor dem Aufbringen der photokatalytisch aktiven Partikel und einem Sperrmittel aus Wasser- und/oder Ionen-undurchlässigen Materialien erzeugt wird, wie dies in Verfahrensvariante 2 vorgesehen ist, sollte vorzugsweise in den nachfolgenden Schritten die Temperatur nicht über 300°C erhöht werden, da es dann zu einer thermischen Zersetzung dieser Materialien kommen kann.

Bei der Herstellung der Sperrschicht-Lösung und/oder -Suspension in Schritt e) der Verfahrensvariante 1 oder bei der Herstellung der Suspension in Schritt b) der Verfahrensvariante 2 liegen bevorzugte Verdünnungen von Wasser-undurchlässigen und/oder Ionen-undurchlässigen Materialien zu Wasser im Bereich von 1 : 100 bis 1 : 600 (Gew./Gew.), weiter bevorzugt sind Verdünnungen von 1 : 250 bis 1 : 350 (Gew./Gew.).

Gemäß weiteren bevorzugten Ausführungen weist die Oberfläche des keramischen Formkörpers Erhebungen auf. Diese Erhebungen können bei Aufbringung der photokatalytisch aktives Material enthaltenden Schicht erzeugt werden, indem in Schritt b) der Verfahrensvariante 1 zusätzlich partikuläres Material zugemischt wird und diese Mischung nachfolgend auf das oxidkeramische Basismaterial aufgebracht wird.

Bei der erfindungsgemäßen Herstellung eines grobkeramischen Formkörpers liegen die in Schritt (b) der Verfahrensvariante 1 verwendeten photokatalytisch aktiven Partikel vorzugsweise in einer nanodispersen Form vor. Hierbei hat sich ein Partikelgrößenbereich in einem Bereich von 5 nm bis etwa 100 nm, weiter bevorzugt von etwa 10 nm bis etwa 50 nm, als sehr geeignet erwiesen.

Bei einer Ausführungsform wird zur Herstellung der photokatalytisch aktives Material enthaltenden Schicht des erfindungsgemäßen keramischen Formkörpers durch Mischen von photokatalytisch aktiven Partikeln und ggf. einem Bindemittel sowie einer Flüssigphase eine bevorzugt homogene Suspension bereitgestellt. Diese Suspension kann in einer gewünschten Schichtdicke auf das oxidkeramische Basismaterial aufgebracht werden.

Dabei bildet sich die photokatalytisch aktives Material enthaltende Schicht nicht nur auf der Oberfläche sondern auch in den Poren bzw. Kapillaren des oxidkeramischen Basismaterials aus. Vorzugsweise handelt es sich um ein grobkeramisches oxidkeramisches Basismaterial. Bei dem porösen oxidkeramischen Basismaterial kann es sich um einen Grünkörper (ungebranntes Keramikmaterial) oder um vorgebranntes oder gebranntes Keramikmaterial handeln. Das poröse oxidkeramische Basismaterial weist vorzugsweise ein Wasseraufnahmevermögen von > 1%, vorzugsweise von 2 bis 12% auf.

### Die Ausführungsbeispiele der Figuren

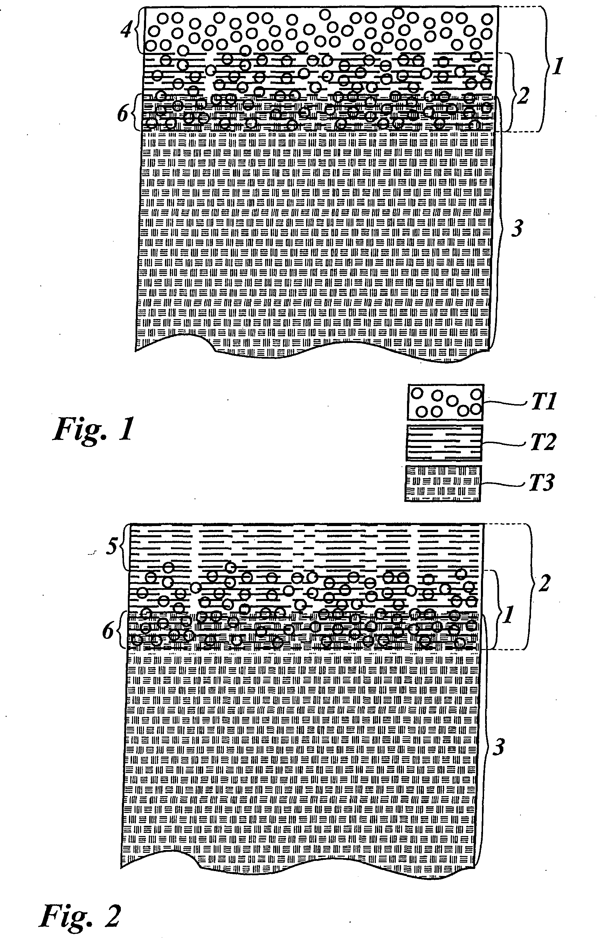

Bevorzugte Ausführungsbeispiele sind anhand der Figuren 1 - 3 erläutert.

Die zu den Figuren in den Kästchen verwendete Symboldarstellung T1, T2 und T3 bedeutet:
T1: photokatalytisch aktives Material
T2: Sperrmaterial
T3: oxidkeramisches Basismaterial

Figur 1 zeigt einen Querschnitt des photokatalytischen Formkörpers. Er weist einen Körper aus oxidkeramischem Basismaterial 3 auf und trägt an seiner Oberfläche eine photokatalytisch aktives Material, insbesondere Titandioxid, enthaltene Schicht 1 und eine Sperrschicht 2. Diese beiden Schichten erstrecken sich bis in das poröse oxidkeramische Basismaterial 3 hinein.

In der Darstellung in Figur 1 ist diese Eindringschicht, d.h. die in das Basismaterial 3 eindringende Teilschicht der Sperrschicht und die photokatalytisch aktives Material enthaltenden Schicht als gemeinsame Schicht mit gleicher Schichtdicke ausgebildet, mit dem Bezugszeichen 6 bezeichnet. Bei abgewandelten Ausführungen kann die Eindringschicht der photokatalytisch aktives Material enthaltenden Schicht 1 auch größer oder kleiner sein als die Eindringschicht der Sperrschicht 2 und/oder unterschiedlich weit in das Basismaterial eindringen. Bei dem Ausführungsbeispiel in Figur 1 ist die Sperrschicht 2 an ihrer Oberseite von einer Teilschicht 4 der Schicht 1 überdeckt. In dieser Teilschicht 4 ist keine Sperrschicht enthalten. Die freie Oberfläche der Teilschicht 4 ist hydrophil.

Die Schichtenstruktur, wie sie in Figur 1 dargestellt ist, stellt sich als stabile Struktur ein, wenn der photokatalytische Formkörper über längere Betriebsdauer bei Außenbedingungen eingesetzt ist, das heißt wenn er der Witterung und der Sonneneinstrahlung ausgesetzt z. B. als Dachziegel montiert ist. Aufgrund dieser photokatalytisch aktiven Schichtenstrukturen können sich Verunreinigungen nicht für längere Zeit auf der Oberfläche festsetzen. Sie werden vorzugsweise photokatalytisch umgesetzt und bei Regen abgespült. In entsprechender Weise wird einer Vergrünung der Oberfläche entgegengewirkt. Die Sperrschicht 2 hat hier zwei wesentliche stabilisierende Funktionen. Sie sorgt dafür, dass der Wasser und/oder lonenaustausch zwischen dem oxidkeramischen Basismaterial 3 und der photokatalytisch aktives Material enthaltenden Schicht 1 blockiert wird oder zu mindestens kontrolliert oder im verringerten Umfang abläuft. Die Sperrschicht 2 verlangsamt oder verhindert eine Vergrünung der freien Oberfläche des Formkörpers, in dem die Sperrschicht 2 einem Eindringen von Wasser und/oder Ionen in das poröse oxidkeramische Basismaterial entgegenwirkt.

Figur 2 zeigt einen Querschnitt des photokatalytischen Formkörpers unmittelbar nach seiner Herstellung, das heißt unmittelbar nach dem Beschichtungsvorgang. Entsprechend wie in Figur 1 erstrecken sich die photokatalytisch aktives Material enthaltenden Schicht 1 und die Sperrschicht 2 in das oxidkeramische Basismaterial 3 hinein. Die Eindringschicht ist in Figur 2 ebenfalls mit 6 bezeichnet. Im Unterschied zu der Ausführung in Figur 1 ist in Figur 2 allerdings die Schicht 1 von einer Teilschicht 5 der Sperrschicht 2 überdeckt, die kein photokatalytisch aktives Material enthält. Die freie Oberfläche dieser Teilschicht 5 ist hydrophob.

Im Laufe der Betriebsdauer bei Außenbedingungen, das heißt unter Einwirkung der Witterung und des Sonnenlichts ergibt sich eine Veränderung der in Figur 2 dargestellten Schichtenstruktur in eine Struktur, wie sie in Figur 1 dargestellt ist. Bei dieser Schichtenveränderung wird die Sperrschicht 2 in ihrem oberen Bereich abgebaut, vorzugsweise so weit, dass sie wie in Figur 1 dargestellt von der Teilschicht 4 überdeckt ist und eine hydrophile freie Oberfläche ausgebildet ist. Die sich somit dann innerhalb der Schicht 1 erstreckende Sperrschicht 2 hat die vorangehend in Verbindung mit Figur 1 erläuterte Funktion und verbessert die selbst reinigende Funktion der photokatalytisch aktives Material enthaltenden Beschichtung.

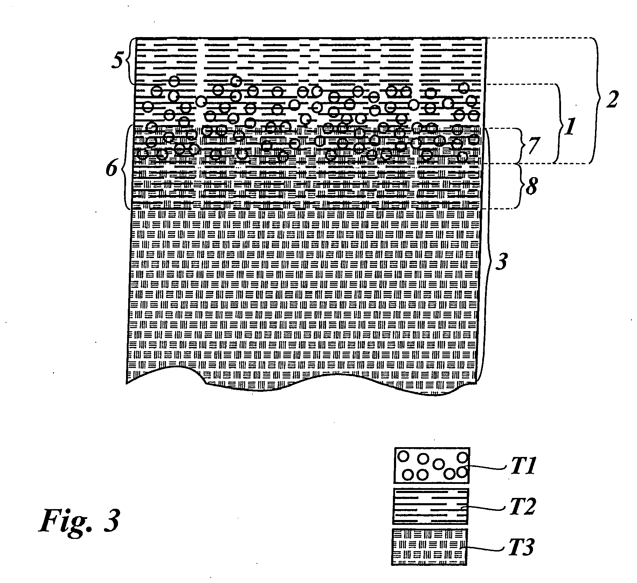

Figur 3 zeigt für ein gegenüber Fig. 2 abgewandeltes Aufsührungsbeispiel einen Querschnitt des photokatalytischen Formkörpers gleich wie Fig. 2 unmittelbar nach seiner Herstellung, das heißt unmittelbar nach dem Beschichtungsvorgang. Entsprechend wie in Figur 2 erstrecken sich die photokatalytisch aktives Material enthaltenden Schicht 1 und die Sperrschicht 2 in das oxidkeramische Basismaterial 3 hinein. Die Eindringschicht, die Sperrschicht und in Teilen auch photokatalytisches Material enthaltende Schicht umfasst, also die Gesamteindringschicht ist in Figur 3 ebenfalls mit 6 bezeichnet. Im Unterschied zu der Ausführung in Figur 2 dringt in Figur 3 die Sperrschicht tiefer in das oxidkeramische Basismaterial als die photokatalytisch aktives Material enthaltende Schicht. Die Eindringschicht der Sperrschicht in Figur 3 kann in 2 Eindringteilschichten unterteilt werden. Die erste Eindringteilschicht der Sperrschicht 2, die Sperrschicht und photokatalytisch aktives Material enthaltende Schicht umfasst, ist mit 7 bezeichnet. Die zweite Eindringteilschicht der Sperrschicht 2, die Sperrschicht und keine photokatalytisch aktives Material enthaltende Schicht umfasst, ist mit 8 bezeichnet. Bei einer bevorzugten Ausführungsform ist die Eindringteilschicht 8 100-fach bis 10.000-fach größer als die Eindringteilschicht 7. Entsprechend zusammengesetzte Eindringschichten können auch bei Ausführungsformen ausgebildet sein, die eine Schichtenstruktur aufweisen, wie sie in Fig. 1 dargestellt ist und sich z. B. im Laufe der Betriebsdauer bei Außenbedingungen einstellt.

### Bezugszeichenliste

- 1: photokatalytisch aktives Material enthaltende Schicht
- 2: Sperrschicht
- 3: oxidkeramisches Basismaterial
- 4: Teilschicht der photokatalytisch aktiven Schicht 1, welche die Sperrschicht 2 überdeckt und nicht von dieser durchdrungen und/oder überlagert wird
- 5: Teilschicht der Sperrschicht 2, welche auf der photokatalytisch aktives Material enthaltenden Schicht 1 aufliegt und diese nicht durchdringt
- 6: gesamte Eindringschicht der Sperrschicht 2 in das oxidkeramische Basismaterial
- 7: erste Eindringteilschicht der Sperrschicht 2, die durchgängig Sperrschicht und photokatalytisch aktives Material enthaltende Schicht umfasst
- 8: zweite Eindringteilschicht der Sperrschicht 2, die Sperrschicht und keine photokatalytisch aktives Material enthaltende Schicht umfasst

## Patentansprüche

1. Keramischer Formkörper aus porösem oxidkeramischem Basismaterial, insbesondere Dachziegel, Ziegel, Klinker, Vormauerstein, Fassadenplatte oder Fassadenwand,
wobei die Oberfläche des oxidkeramischen Basismaterials eine photokatalytisch aktives Material enthaltende Schicht (1) trägt, die sich vorzugsweise bis in das oxidkeramische Basismaterial (3) hinein erstreckt, und
wobei innerhalb der photokatalytisch aktives Material enthaltenden Schicht (1) eine Sperrschicht (2), die eine Dicke in einem Bereich von 1 mm bis 4 mm aufweist, ausgebildet ist, die sich vorzugsweise bis in das oxidkeramische Basismaterial hinein erstreckt, wobei die Sperrschicht (2) von einer Teilschicht (4) der photokatalytisch aktives Material enthaltenden Schicht überdeckt ist, welche an der freien Oberfläche hydrophil ist, wobei die Sperrschicht (2) hydrophob ist.

2. Keramischer Formkörper nach einem der vorhergehenden Ansprüche, wobei die photokatalytisch aktives Material enthaltende Schicht (1) TiO₂, Fe₂O₃, ZnO, CeO₂ und/oder ZrO₂ umfasst.

3. Keramischer Formkörper nach einem der vorhergehenden Ansprüche, wobei die photokatalytisch aktives Material enthaltende Schicht (1) eine Dicke in einem Bereich von 5 bis 500 nm aufweist.

4. Keramischer Formkörper nach einem der vorhergehenden Ansprüche 1 bis 3, wobei die Teilschicht (4) der photokatalytisch aktives Material enthaltenden Schicht (1), die die Sperrschicht (2) überdeckt, eine Dicke in einem Bereich von 5 bis 500 nm aufweist.

5. Keramischer Formkörper nach einem der vorhergehenden Ansprüche, wobei die Sperrschicht (2) mindestens ein Silikon umfasst oder daraus besteht.

6. Keramischer Formkörper nach einem der vorhergehenden Ansprüche, wobei die Sperrschicht (2) hergestellt wird, indem auf die photokatalytisch aktives Material enthaltende Schicht (1) eine hydrophobe Schicht (2) aufgebracht wird, das vorzugsweise bis in das oxidkeramische Basismaterial (3) eindringt, wobei die Sperrschicht (2) unter Einwirkung von UV-Licht oder Sonnenlicht zu mindestens zum Teil an der freien Oberfläche abgebaut wird oder modifiziert wird, sodass eine hydrophile freie Oberfläche auf dem keramischen Formkörper erhalten wird.

7. Verfahren zur Herstellung eines keramischen Formkörpers nach einem der Ansprüche 1 bis 6, umfassend die Schritte:
a) Bereitstellen eines keramischen Formkörpers aus porösem oxidkeramischem Basismaterial,
b) Mischen von photokatalytisch aktiven Partikeln und einer Flüssigphase unter Bereitstellen einer Suspension,
c) Aufbringen der in Schritt b) bereit gestellten Suspension auf das poröse oxidkeramische Basismaterial des keramischen Formkörpers unter Ausbildung einer photokatalytisch aktives Material enthaltenden Schicht,
d) Härten der in Schritt c) hergestellten Schicht,
e) Aufbringen einer Sperrschicht-Lösung und/oder Sperrschicht -Suspension auf den in Schritt d) erhaltenen keramischen Formkörper, so dass die Lösung und/oder Suspension die photokatalytisch aktives Material enthaltende Schicht und vorzugsweise Teile des oxidkeramischen Basismaterials durchdringt unter Ausbildung der Sperrschicht mit einer Dicke in einem Bereich von 1 mm bis 4 mm,
f) Trocknen des in Schritt e) bereit gestellten Formkörpers und
g) Bestrahlen mit UV-Licht oder Sonnenlicht des in Schritt f) bereit gestellten Formkörpers,
oder umfassend die Schritte:
a) Bereitstellen eines keramischen Formkörpers aus porösem oxidkeramischem Basismaterial,
b) Aufbringen einer Sperrschicht-Lösung und/oder Sperrschicht -Suspension auf das poröse oxidkeramische Basismaterial des keramischen Formkörpers, so dass die Lösung und/oder Suspension Teile des oxidkeramischen Basismaterials durchdringt unter Ausbildung der Sperrschicht mit einer Dicke in einem Bereich von 1 mm bis 4 mm,
c) Trocknen des in Schritt b) bereit gestellten Formkörpers,
d) Mischen von photokatalytisch aktiven Partikeln und einer Flüssigphase unter Bereitstellen einer Suspension,
e) Aufbringen der in Schritt d) bereit gestellten Suspension auf das poröse oxidkeramische Basismaterial des keramischen Formkörpers unter Ausbildung einer photokatalytisch aktives Material enthaltenden Schicht,
f) Härten der in Schritt e) hergestellten Schicht, und
g) Bestrahlen mit UV-Licht oder Sonnenlicht des in Schritt f) bereit gestellten Formkörpers.

8. Verwendung des Formkörpers nach einem der Ansprüche 1 bis 6, zur Abdeckung eines Baukörpers im Außenbereich, wobei der Formkörper unter Einwirkung von Regen und Sonnenlicht selbstreinigend ist und die Vergrünung des Formkörpers im Außenbereich verzögert und/oder verhindert.

## Claims

1. Ceramic moulded body made of porous oxide-ceramic base material, in particular a roof tile, tile, brick, outer wall stone, façade panel or façade wall,
wherein the surface of the oxide-ceramic base material has a layer (1) containing photo-catalytically active material, said layer preferably extending into the oxide-ceramic base material (3), and
wherein a blocking layer (2), which has a thickness ranging from 1mm to 4mm, is formed inside the layer (1) containing photo-catalytically active material, said blocking layer preferably extending into the oxide-ceramic base material, wherein the blocking layer (2) is covered by a partial layer (4) of the layer containing photo-catalytically active material, said partial layer being hydrophilic on the free surface, wherein the blocking layer (2) is hydrophobic.

2. Ceramic moulded body according to one of the preceding claims, wherein the layer (1) containing photo-catalytically active material comprises TiO₂, Fe₂O₃, ZnO, Ce02 and/or ZrO₂.

3. Ceramic moulded body according to one of the preceding claims, wherein the layer (1) containing photo-catalytically active material has a thickness ranging from 5 to 500nm.

4. Ceramic moulded body according to one of preceding claims 1 to 3, wherein the partial layer (4) of the layer (1) containing photo-catalytically active material, said layer covering the blocking layer (2), has a thickness ranging from 5 to 500nm.

5. Ceramic moulded body according to one of the preceding claims, wherein the blocking layer (2) comprises or consists of at least one silicone.

6. Ceramic moulded body according to one of the preceding claims, wherein the blocking layer (2) is produced by a hydrophobic layer (2) being applied to the layer (1) containing photo-catalytically active material, said active material preferably penetrating into the oxide ceramic base material (3), wherein the blocking layer (2) is destroyed or modified under the effect of UV-light or sunlight at least in part on the free surface, such that a hydrophilic free surface is obtained on the ceramic moulded body.

7. Method for producing a ceramic moulded body according to one of claims 1 to 6, comprising the following steps:
a) providing a ceramic moulded body made of porous oxide-ceramic base material,
b) mixing photo-catalytically active particles and a liquid phase to provide a suspension,
c) applying the suspension provided in step b) to the porous oxide-ceramic base material of the ceramic moulded body by forming a layer containing photo-catalytically active material,
d) curing the layer produced in step c),
e) applying a blocking layer solution and/or blocking layer suspension to the ceramic moulded body obtained in step d), such that the solution and/or suspension penetrates the layer containing photo-catalytically active material and preferably parts of the oxide ceramic base material by forming the blocking layer with a thickness ranging from 1mm to 4mm,
f) drying the moulded body provided in step e), and
g) irradiating the moulded body provided in step f) with UV light or sunlight,
or comprising the following steps:
a) providing a ceramic moulded body made of porous oxide-ceramic base material,
b) applying a blocking layer solution and/or blocking layer suspension to the porous oxide-ceramic base material of the ceramic moulded body, such that the solution and/or suspension penetrates parts of the oxide-ceramic base material by forming the blocking layer with a thickness ranging from 1mm to 4mm,
c) drying the moulded body provided in step b),
d) mixing photo-catalytically active particles and a liquid phase to provide a suspension,
e) applying the suspension provided in step d) to the porous oxide-ceramic base material of the ceramic moulded body to form a layer containing photo-catalytically active material,
f) curing the layer produced in step e), and
g) irradiating the moulded body provided in step f) with UV light or sunlight.

8. Use of the moulded body according to one of claims 1 to 6, for covering a construction body in the outdoor area, wherein the moulded body is self-cleaning under the influence of rain and sunlight and delays and/or prevents the greening of the moulded body in the outdoor area.

## Revendications

1. Corps moulé en céramique, constitué d'un matériau de base poreux de type céramique à base d'oxyde, plus particulièrement une tuile de toiture, une brique, du clinker, une brique de parement, une plaque de façade ou un mur de façade,
dans lequel la surface du matériau de type céramique à base d'oxyde supporte une couche (1) contenant un matériau photo-catalytiquement actif, qui s'étend de préférence jusque dans le matériau de base de type céramique à base d'oxyde (3) et
dans lequel l'intérieur de la couche (1) contenant un matériau photo-catalytiquement actif, est réalisée une couche de barrière (2) qui présente une épaisseur de l'ordre de 1 mm à 4 mm, qui s'étend de préférence jusque dans le matériau de base de type céramique à base d'oxyde, la couche de barrière (2) étant recouverte par une couche partielle (4) de la couche contenant un matériau photo-catalytiquement actif, qui est hydrophile sur la surface libre, la couche de barrière (2) étant hydrophobe.

2. Corps moulé en céramique selon l'une des revendications précédentes, dans lequel la couche (1) contenant un matériau photo-catalytiquement actif comprend du TiO₂, du Fe₂O₃, du ZnO du CeO₂ et/ou du ZrO₂.

3. Corps moulé en céramique selon l'une des revendications précédentes, dans lequel la couche (1) contenant un matériau photo-catalytiquement actif présente une épaisseur de l'ordre de 5 à 500 nm.

4. Corps moulé en céramique selon l'une des revendications 1 à 3, dans lequel la couche partielle (4) de la couche (1) contenant un matériau photo-catalytiquement actif, qui recouvre la couche de barrière (2), présente une épaisseur de l'ordre de 5 à 500 mm.

5. Corps moulé en céramique selon l'une des revendications précédentes, dans lequel la couche de barrière (2) comprend au moins un silicone ou est constitué de celui-ci.

6. Corps moulé en céramique selon l'une des revendications précédentes, dans lequel la couche de barrière (2) est réalisée grâce au fait que, sur la couche (1) contenant un matériau photo-catalytiquement actif, est appliquée une couche hydrophobe (2) qui pénètre, de préférence jusque dans le matériau de base de type céramique à base d'oxyde (3), la couche de barrière (2) étant structurée ou modifiée sous l'effet de la lumière UV ou de la lumière solaire, au moins en partie sur la surface libre, de façon à obtenir une surface libre hydrophile sur le corps moulé en céramique.

7. Procédé de fabrication d'un corps moulé en céramique selon l'une des revendications 1 à 6, comprenant les étapes suivantes :
a) réalisation d'un corps moulé en céramique constitué d'un matériau de base poreux de type céramique à base d'oxyde,
b) mélange de particules photo-catalytiquement actives et d'une phase liquide en créant une suspension,
c) application de la suspension créée à l'étape b) sur le matériau de base poreux de type céramique à base d'oxyde du corps moulé en céramique en formant une couche contenant un matériau de base poreux de type céramique à base d'oxyde,
d) durcissement de la couche réalisée à l'étape c),
e) application d'une solution de couche de barrière et/ou d'une suspension de couche de barrière sur le corps moulé en céramique obtenu à l'étape d), de façon à ce que la solution et/ou la suspension traverse la couche contenant un matériau de base poreux de type céramique à base d'oxyde et, de préférence, des parties du matériau de base de type céramique à base d'oxyde, en formant la couche de barrière avec une épaisseur de l'ordre de 1 mm à 4 mm,
f) séchage du corps moulé créé à l'étape e) et
g) irradiation avec de la lumière UV ou la lumière solaire du corps moulé créé à l'étape f),
ou comprenant les étapes suivantes :
a) création d'un corps moulé en céramique constitué d'un matériau de base poreux de type céramique à base d'oxyde,
b) application d'une solution de couche de barrière et/ou d'une suspension de couche de barrière sur le matériau de base poreux de type céramique à base d'oxyde du corps moulé en céramique, de façon à ce que la solution et/ou la suspension traverse des parties du matériau de base de type céramique à base d'oxyde en formant la couche de barrière avec une épaisseur de l'ordre de 1 mm à 4 mm,
c) séchage du corps moulé créé à l'étape b),
d) mélange de particules photo-catalytiquement actives et d'une phase liquide en créant une suspension,
e) application de la suspension créée à l'étape d) sur le matériau de base poreux de type céramique à base d'oxyde en formant une couche contenant un matériau photo-catalytiquement actif,
f) durcissement de la couche réalisée à l'étape e) et
g) irradiation avec de la lumière UV ou la lumière solaire du corps moulé créé à l'étape f).

8. Utilisation du corps moulé selon l'une des revendications 1 à 6, pour le recouvrement d'une construction à l'extérieur, dans laquelle le corps moulé est autonettoyant sous l'effet de la pluie et de la lumière du soleil et ralentissant et/ou empêchant le verdissement du corps moulé à l'extérieur.
